# FASCICULE DE BREVET EUROPEEN

(11) **EP 0 928 239 B1**
(45) Date de publication et mention de la délivrance du brevet: **22.05.2002**
(21) Numéro de dépôt: 97919127.7
(22) Date de dépôt: 18.09.1997
(51) Int. Cl.: B29B 13/04, B29C 55/26

(54) **PROCEDE ET INSTALLATION DE TRAITEMENT DE TUBES EN MATIERE PLASTIQUE AVEC ETIRAGE BI-AXIAL**
VERFAHREN UND ANLAGE ZUR BEHANDLUNG DER KUNSTSTOFFRÖHREN MIT BIAXIALEN RECKEN
METHOD AND INSTALLATION FOR TREATING PLASTIC TUBES WITH BI-AXIAL DRAWING

(30) Priorité: 26.09.1996 FR 9611705
(43) Date de publication de la demande: 14.07.1999
(73) Titulaire: Alphacan, 78170 La Celle-Saint-Cloud (FR)
(72) Inventeur: PREVOTAT, Bernard, F-78150 Le Chesnay (FR); ACKET, Jean-Jacques, F-58000 Challuy (FR)
(74) Mandataire: Michardière, Bernard
(86) Numéro de dépôt international: FR9701653
(87) Numéro de publication internationale: WO9813182

(56) Documents cités:
- EP-A- 0 021 438
- EP-A- 0 468 417
- FR-A- 2 462 254
- US-A- 4 340 344
- US-A- 5 096 634
- PATENT ABSTRACTS OF JAPAN vol. 18, no. 154 (M-1577), 15 mars 1994 & JP 05 329926 A (C C I K.K.), 14 décembre 1993, & DATABASE WPI Section Ch, Week 9403 Derwent Publications Ltd., London, GB; Class A, AN 94-022370 (03) & JP 05 329 926 A (C C I K.K.) , 14 décembre 1993

## Description

L'invention est relative à un procédé de traitement de tubes en matière plastique obtenus par extrusion, procédé du genre selon lequel on porte un tube en matière plastique à une température d'orientation moléculaire, supérieure à la température ambiante, et on lui fait subir un étirage bi-axial par dilatation radiale et par allongement axial, pour obtenir un tube à bi-orientation dont les propriétés mécaniques sont améliorées.

Un tel procédé est connu, notamment d'après les documents GB-A-1 432 539 ou US-4 340 344. Le traitement supplémentaire des tubes en matière en plastique, imposé par ce procédé, entraîne une augmentation non négligeable du prix des produits finis. Toutefois, l'importante amélioration des caractéristiques mécaniques des produits, notamment l'augmentation de la résistance mécanique à la pression interne, conduit à utiliser ce procédé pour des produits, notamment des tubes destinés à véhiculer des fluides sous pression, qui doivent présenter une bonne résistance mécanique.

Selon le procédé connu, les tubes fabriqués par extrusion sont stockés à la température ambiante, sont ensuite prélevés et sont portés, par chauffage, de la température ambiante à la température d'orientation moléculaire pour subir le traitement . La mise en température d'un tube à traiter est relativement longue et consomme de l'énergie, car il faut faire passer le tube de la température ambiante à la température d'orientation moléculaire. Il en résulte que le rendement du procédé de traitement n'est pas très élevé, et demande à être amélioré.

L'invention a pour but, surtout, de fournir un procédé de traitement de tubes en matière plastique, notamment en PVC (polychlorure de vinyle), tel que défini précédemment qui permette un rendement plus élevé, notamment par réduction du temps de traitement et par diminution de la consommation d'énergie nécessaire au traitement.

Il est souhaitable que le procédé permette d'améliorer le profil de température dans la paroi du tube en vue de son étirage bi-axial.

Il est souhaitable en outre que le procédé de traitement reste relativement simple et n'exige pas une emprise au sol trop importante, afin que les investissements pour la mise en oeuvre du procédé restent d'un coût acceptable.

Selon l'invention, un procédé de traitement de tubes en matière plastique, notamment en PVC, obtenus par extrusion , selon lequel on porte un tube en matière plastique à une température d'orientation moléculaire, supérieure à la température ambiante, et on lui fait subir un étirage bi-axial par dilatation radiale et par allongement axial, pour obtenir un tube à bi-orientation dont les propriétés mécaniques sont améliorées, est caractérisé par le fait que:
- le tube est coupé en éléments de longueur déterminée alors qu'il vient d'être extrudé et que sa température est supérieure à la température d'orientation moléculaire, chaque élément constituant une ébauche;
- chaque ébauche est placée dans une enceinte pour y être refroidie par un fluide à une température voisine de la température d'orientation moléculaire, le temps de séjour de l'ébauche dans l'enceinte étant supérieur au temps de production de l'ébauche par extrusion , pour permettre une mise en température correcte.

Dans le cas où ce temps de séjour serait considéré comme trop long, il est possible de refroidir violemment mais brièvement l'ébauche avant qu'elle ne soit introduite dans l'enceinte, par une aspersion ou un bain d'eau froide. Une fine couche de matière pourrait alors se trouver temporairement à une température inférieure à la tempértature désirée pour l'opération de bi-orientation.

L'ébauche est ensuite extraite de l'enceinte pour subir le traitement assurant une bi-orientation.

De préférence, le tube , juste après extrusion et avant coupure, est refroidi superficiellement, en traversant un conformateur, pour assurer une coupe nette du tube encore chaud.

Le tube est avantageusement coupé par une opération de tranchage avec un dispositif à lame, du type guillotine.

L'enceinte à fluide est avantageusement formée par un bac à eau chaude qui, dans le cas du traitement du PVC, est à une température proche de, ou égale à, sa température d'ébullition sous la pression atmosphérique.

Il est souhaitable d'assurer le meilleur (et homogène) transfert de chaleur entre le fluide et un objet de forme complexe ( extérieur et intérieur d'un tube de grande longueur). A cette fin, de préférence, les ébauches sont remuées dans l'enceinte. Avantageusement, le fluide est mis en circulation dans l'enceinte, en particulier suivant une direction parallèle à l'axe du tube.

L'invention est également relative à une installation pour la mise en oeuvre du procédé de traitement de tubes en matière plastique tel que défini précédemment.

Une installation de traitement de tubes en matière plastique, notamment en PVC, selon l'invention, comprend une extrudeuse pour produire un tube et des moyens pour faire subir au tube un étirage bi-axial par dilatation radiale et par allongement axial, pour obtenir un tube à bi-orientation dont les propriétés mécaniques sont améliorées, et est caractérisée par le fait qu'elle comporte:
- des moyens de coupe, à la sortie de l'extrudeuse, pour débiter le tube en éléments de longueur déterminée alors qu'il vient d'être extrudé et que sa température est supérieure à la température d'orientation moléculaire, chaque élément coupé constituant une ébauche;
- une enceinte pour recevoir les ébauches et les refroidir par un fluide à une température voisine de la température d'orientation moléculaire, l'enceinte étant prévue pour assurer un temps de séjour de l'ébauche supérieur au temps de production de l'ébauche par extrusion , pour permettre une mise en température correcte,
- et des moyens d'extraction de l'ébauche hors de l'enceinte pour la faire passer aux moyens pour effectuer un étirage bi-axial.

Un conformateur peut être prévu à la sortie de l'extrudeuse pour refroidir superficiellement le tube et permettre une coupe nette du tube encore chaud.

Les moyens de coupe sont avantageusement constitués par un dispositif à lame de coupe du type guillotine, en particulier fixé sur le conformateur.

L'enceinte à fluide peut être formée par un bac à eau chaude qui, dans le cas du traitement du PVC, est à une température proche de, ou égale à, sa température d'ébullition sous la pression atmosphérique.

Des moyens pour faire circuler le fluide dans le bac, en particulier suivant la direction axiale des ébauches, sont prévus

De préférence, les ébauches sont remuées dans l'enceinte.

Des moyens de mise en rotation de l'ébauche qui sera prochainement extraite du bac peuvent être prévus.

Avantageusement, un tapis roulant convoyeur, ou un dispositif à bandes, est disposé à la sortie de l'extrudeuse, dans son alignement, pour recevoir le tube. La vitesse du tapis est sensiblement égale à la vitesse de sortie du tube de l'extrudeuse, pour réduire au minimum les contraintes sur le tube qui sort. La vitesse du tapis peut être variable autour de cette condition pour sur-épaissir ( ou sous-épaissir) localement le tube-ébauche.

L'enceinte à fluide, pour mise en température de l'ébauche, est de préférence placée sur un côté du tapis convoyeur, à un niveau inférieur. Des moyens de poussée sont prévus pour déplacer transversalement l'ébauche et la faire arriver dans l'enceinte à fluide.

L'invention consiste, mises à part les dispositions exposées ci-dessus, en un certain nombre d'autres dispositions dont il sera plus explicitement question ci-après à propos d'un exemple de réalisation décrit avec références aux dessins ci-annexés, mais qui n'est nullement limitatif.

La figure 1, de ces dessins, est une vue schématique simplifiée de dessus d'une installation de fabrication de tubes en matière plastique mettant en oeuvre le procédé de traitement de l'invention.

La figure 2 est une vue schématique simplifiée en élévation de l'installation de la figure 1.

La figure 3 est une coupe transversale d'une enceinte pour la mise en température correcte des ébauches, cette enceinte étant située à côté d'un tapis convoyeur.

La figure 4 est une vue en élévation du dispositif de coupe des tubes après extrusion.

La figure 5, enfin, est une vue de gauche par rapport à la figure 4.

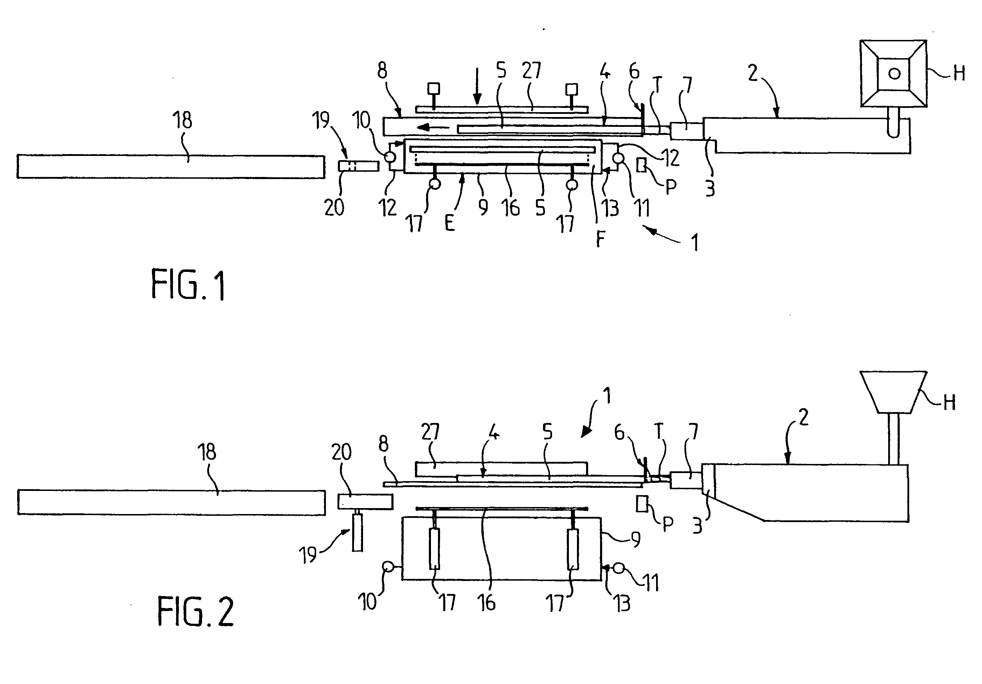

En se reportant aux dessins, notamment aux figures 1 et 2, on peut voir une installation 1 mettant en oeuvre le procédé de l'invention.

L'installation comprend une extrudeuse 2 schématiquement représentée, alimentée en granulés de matière thermoplastique, notamment en granulés de PVC, à partir d'une trémie H schématiquement représentée. Comme bien connu, les effets conjugués de la chaleur et de la pression, à l'intérieur de l'extrudeuse, permettent l'agglomération des granulés de matière plastique et l'obtention, à la sortie du nez 3 de l'extrudeuse, d'un tube-ébauche ou tube T dont la paroi est relativement molle et à température relativement élevée. Dans le cas du PVC, la température de la paroi du tube à la sortie de l'extrudeuse est de l'ordre de 180°C à 200°C.

Dans une installation classique (non représentée), l'extrudeuse est suivie d'une unité (non représentée) assurant un refroidissement progressif du tube T qui se rigidifie au fur et à mesure de ce refroidissement. A la sortie d'une telle unité de refroidissement le tube , qui n'a pas subi le traitement lui assurant une bi-orientation, est débité en tronçons de longueur déterminée et stocké à la température ambiante. Les tronçons, ainsi préparés, sont repris ultérieurement pour subir le traitement de bi-orientation après un chauffage préalable jusqu'à la température d'orientation moléculaire. La coupe du tube à la sortie de l'unité de refroidissement s'effectue relativement facilement du fait que le tube est rigide.

La longueur de l'unité de refroidissement dépend de plusieurs paramètres, notamment de l'épaisseur du tube sortant de l'extrudeuse. A titre indicatif, non limitatif, la plage d'épaisseur des tubes-ébauches T peut aller de quelques millimètres jusqu'à 40 ou 50 mm. Dans le cas de tubes à paroi épaisse, par exemple de l'ordre de 20mm, à la sortie de l'extrudeuse 2, la longueur de l'unité de refroidissement deviendrait très importante et serait la source de dépenses élevées.

Selon l'invention, pour remédier à ces inconvénients, le tube T est coupé en éléments 4 de longueur déterminée alors qu'il vient d'être extrudé et que sa température est supérieure à la température d'orientation moléculaire, chaque élément ainsi coupé constituant une ébauche 5.

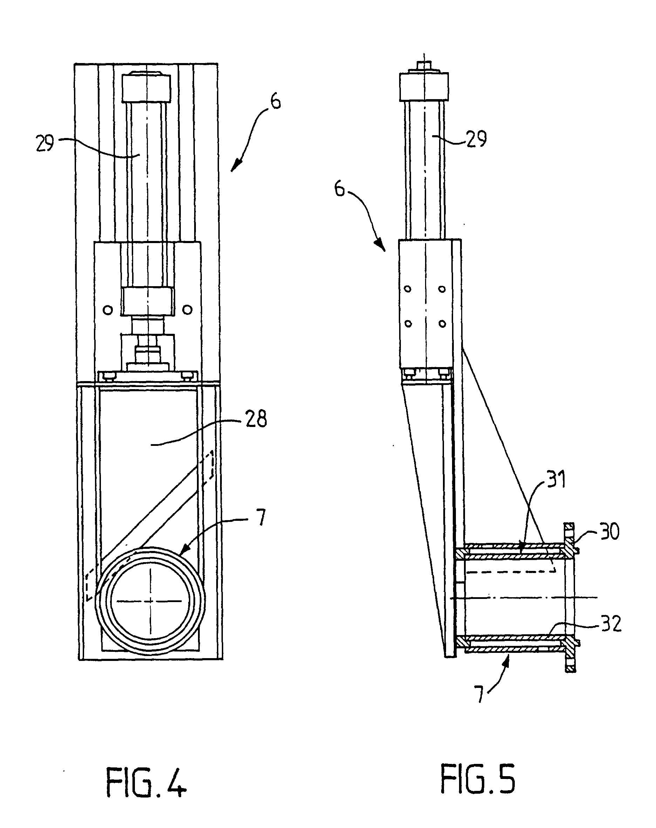

L'expérience a montré qu'une telle coupe peut s'effectuer correctement en particulier avec une cisaille 6 du type guillotine qui sera décrite plus en détail à propos des figures 4 et 5.

En outre, on prévoit avantageusement à la sortie de l'extrudeuse un conformateur 7 de faible longueur, en particulier inférieure à 0,50m , qui assure un refroidissement superficiel du tube pour figer la couche extérieure du tube et assurer une coupe nette à la guillotine.

Le tube sortant de l'extrudeuse 2 et du conformateur 7 est reçu sur un tapis roulant convoyeur 8 situé dans le prolongement axial de l'extrudeuse 2. La vitesse du tapis 8 est sensiblement égale à la vitesse de sortie du tube T de l'extrudeuse pour réduire au minimum les contraintes de traction ou de compression sur le tube qui sort. Il est à noter qu'il est possible de sur-épaissir localement le tube-ébauche T en ralentissant le tapis 8 au moment du passage dans le conformateur 7 de la matière constituant la zone désirée. Inversement, on peut sous-épaissir localement le tube-ébauche en accélérant le tapis 8 au moment approprié.

Le refroidissement superficiel du tube, amorcé dans le conformateur 7, peut se poursuivre au-dessus du tapis convoyeur 8 par une rampe d'arrosage (non représentée) répandant de l'eau sur l'ébauche 5.Dans le cas du PVC, la température de surface peut alors être voisine de 70°C.

Chaque ébauche 5 est ensuite placée dans une enceinte E, disposée sur un côté du tapis 8, pour y être refroidie par un fluide F se trouvant sensiblement à la température d'orientation moléculaire de la matière plastique de l'ébauche. Dans le cas de tubes en PVC, dont la température d'orientation moléculaire se situe dans une plage d'environ 90°C à 110°C, une solution avantageuse consiste à utiliser l'eau chaude comme fluide de refroidissement, à une température voisine de sa température d'ébullition sous la pression atmosphérique, soit 100°C. Dans un exemple de réalisation, l'eau du bac était à une température comprise entre 95°C et 98°C.

L'eau du bac , bien qu'au voisinage de sa température d'ébullition, intervient comme fluide de refroidissement puisque l'ébauche sortant de l'extrudeuse est à une température d'environ 180°C, dans le cas du PVC, et que seule la zone superficielle a été refroidie. Une auto-régulation thermique se produit dans le bac 9 par vaporisation de l'eau.

Le temps de séjour de l'ébauche 5 dans le bac 9 est suffisant pour permettre une mise en température correcte, c'est-à-dire une homogénéisation de la température de l'ébauche, essentiellement suivant la direction longitudinale et la direction périphérique. La température dans l'épaisseur du tube, ou direction radiale, sera évoquée plus loin. Le temps de séjour est supérieur au temps nécessaire pour produire l'ébauche par extrusion; le temps de séjour peut être de l'ordre de 20 à 30 minutes pour des tubes en PVC dont l'épaisseur en sortie d'extrudeuse est de l'ordre de 20mm. Le temps de production d'une ébauche par l'extrudeuse est de l'ordre de quelques minutes, par exemple 3 à 5 minutes. En conséquence, le bac 9 est prévu pour stocker un nombre d'ébauches suffisant, et adapté au temps de traitement d'extrusion et au temps de traitement de bi-orientation ultérieur.

La mise en température s'effectue ainsi avec un bac 9 de longueur réduite.

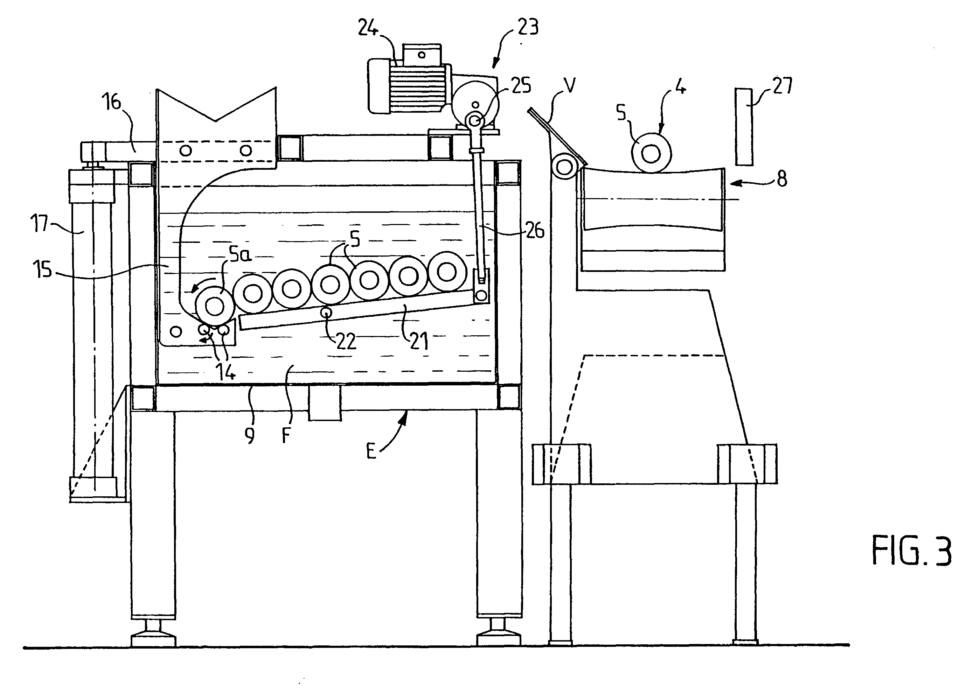

Avantageusement on fait circuler l'eau chaude à l'intérieur du bac à l'aide de pompes 10, 11 et de canalisations 12 reliant des zones d'extrémités longitudinales du bac à l'admission et au refoulement de chaque pompe. L'ensemble est agencé pour que la circulation d'eau, dans le bac 9, s'effectue suivant une direction d'ensemble parallèle à la longueur du bac et à l'axe des ébauches 5 plongées dans ce bac. La pompe 11 située du côté droit du bac 9 selon les dessins, est munie, sur son refoulement, d'un injecteur 13 positionné de manière à envoyer le jet d'eau à l'intérieur de l'ébauche 5a la plus ancienne dans le bac 9 et qui sera la prochaine à être extraite du bac . Cette ébauche 5a se trouve, selon la figure 3, à l'extrémité gauche de la juxtaposition d'ébauches 5. En outre, pour améliorer encore l'homogénéisation de température de l'ébauche 5a, des moyens 14 d'entraînement en rotation de cette ébauche 5a sont prévus. Ces moyens 14 peuvent être constitués par deux rouleaux, parallèles à l'axe de l'ébauche, dont l'un est moteur.

Les moyens d'entraînement en rotation 14 sont supportés par des bras 15 en col de cygne renversé. De tels bras 15 sont répartis en nombre suffisant suivant la direction longitudinale de l'ébauche 5a et sont fixés à un support 16 qui peut être soulevé, relativement au bâti du bac 9, par un ou plusieurs vérins 17 de manière à extraire l'ébauche 5a du bac 9.

Il est à noter que l'homogénéisation de température de l'ébauche 5a est assurée essentiellement suivant la direction longitudinale et la direction périphérique. Dans la direction radiale (épaisseur) de l'ébauche , il n'est pas nécessaire que la température soit homogène. Le temps d'immersion étant relativement faible ( 20 à 30 minutes), la température du PVC à coeur ( à mi-épaisseur de l'ébauche ) est à une valeur intermédiaire entre la température d'extrusion (environ 200°C) et la température de l'eau (environ 100°C). Ceci contribue à améliorer le traitement ultérieur d'étirage bi-axial.

Des moyens P, représentés très sommairement sur les Figures 1 et 2, sont en outre prévus pour déplacer, suivant la direction longitudinale, l'ébauche 5a soulevée du bac et pour 1' introduire dans une unité 18 où elle subira une dilatation radiale et un allongement axial conduisant à la bi-orientation et à l'amélioration des propriétés mécaniques de la matière. Un élévateur 19 est prévu entre le bac 9 à eau chaude et l'unité 18. L'élévateur 19 est muni d'un guide 20 qui, en position haute, soutient l'ébauche lors de son transfert des bras 15 à l'unité 18.

De préférence, les ébauches 5 stockées dans le bac 9, à l'exception de l'ébauche 5a prochaine à être extraite, sont supportées par des bras transversaux 21 montés pivotants autour d'un axe 22, parallèle à la direction longitudinale des ébauches. Les bras 21 sont animés d'un mouvement d'oscillation alternative autour de l'axe 22 par un système d'entraînement 23 comprenant un moteur 24 entraînant un excentrique 25 relié par une bielle 26 à une extrémité du bras 21.

Comme visible sur la figure 3, le convoyeur 8 qui reçoit le tube à la sortie de l'extrudeuse 2, est placé parallèlement à un grand côté du bac 9, au niveau supérieur de ce bac. Un dispositif de poussée transversale 27 est prévu pour le transfert de l'ébauche 5 dans le bac 9 où elle tombe par gravité.

Un volet V (Fig.3) basculant est prévu pour laisser passer l'ébauche 5 en l'empêchant de tomber dans l'espace entre bac 9 et tapis 8.

La cisaille-guillotine 6 est illustrée plus en détail sur les figures 4 et 5. Cette cisaille comprend une lame 28 dont le bord de coupe est oblique et qui peut être déplacée verticalement par un vérin 29. A la différence de la représentation schématique des Figures 1 et 2, cette lame de coupe 26 est située à la sortie du conformateur 7 dont l'extrémité éloignée de la guillotine 6 est munie d'un flasque 30 pour la fixation sur la sortie de l'extrudeuse. Le conformateur 7 comporte une double enveloppe cylindrique déterminant une chambre annulaire 31 dans laquelle circule de l'eau de refroidissement, le tube en matière plastique passant dans l'enveloppe cylindrique intérieure 32 du conformateur 7.

Ceci étant, le fonctionnement de l'installation est le suivant.

L'extrudeuse 2, alimentée en granulés ou poudre de matière première par la trémie H, fournit en sortie un tube T à paroi molle qui, en traversant le conformateur 7, est refroidi sur sa surface . Le tube T est reçu sur le tapis convoyeur 8. Lorsque la longueur de tube atteint une valeur prédéterminée( 6 mètres par exemple), le dispositif de coupe 6 à guillotine découpe un élément 4 qui poursuit son trajet sur le tapis 8 jusqu'à se trouver en position pour être éjecté dans le bac 9.

Le dispositif pousseur 27 est alors déclenché pour pousser l'élément 4/ébauche 5 transversalement au tapis 8, vers le bac 9 .

La dernière ébauche 5 entrée dans le bac 9 se trouve sur la droite selon la figure 3. Cette ébauche va séjourner un temps égal à un multiple du temps nécessaire à l'extrusion d'un élément, et se déplacer progressivement, dans le sens transversal, vers les rouleaux 14. Lorsque l'ébauche arrive en 5a sur les rouleaux 14, elle est mise en rotation autour de son axe et est traversée, suivant son axe, par un courant d'eau provenant de l'injecteur 13.

L'ébauche 5a est ensuite soulevée par les bras 15 et est poussée longitudinalement par le dispositif P pour passer sur, ou dans, le guide 20 et entrer dans l'unité de traitement 18, qui se trouve dans l'alignement de l'ébauche 5a soulevée par les bras 15.

Le procédé et l'installation de l'invention permettent un traitement en ligne des tubes, c'est-à-dire que le traitement de bi-orientation peut être effectué à la suite de l'extrudeuse. Le bac 9 intermédiaire, par le stockage de plusieurs ébauches, permet la mise en température correcte sous un encombrement réduit.

Le gain en énergie est sensible puisque l'ébauche qui se trouve à une température supérieure à la température d'orientation moléculaire est directement amenée à cette dernière température, sans être refroidie jusqu'à la température ambiante, ce qui aurait nécessité un réchauffage ultérieur.

L'installation d'extrusion est simplifiée car elle ne comporte pas d'unité pour assurer un refroidissement important , ni de dispositif de tirage du tube.

L'invention a été décrite avec l'exemple du PVC, mais il est clair qu'elle s'applique à d'autres matières plastiques susceptibles d'un traitement analogue, par exemple polyéthylène ou polypropylène. Il convient de régler la température du fluide de l'enceinte E selon la matière plastique.

Le fluide utilisé dans l'enceinte E peut, bien entendu, être autre que de l'eau. Il est possible, par exemple, de compléter ou de remplacer l'action de l'eau par de l'air ou par de l'huile.

## Revendications

1. Procédé de traitement de tubes en matière plastique, notamment en PVC, obtenus par extrusion , selon lequel on porte un tube à une température d'orientation moléculaire, supérieure à la température ambiante, et on lui fait subir un étirage bi-axial par dilatation radiale et par allongement axial, pour obtenir un tube à bi-orientation dont les propriétés mécaniques sont améliorées, **caractérisé par le fait que**:
- le tube (T) est coupé en éléments (4) de longueur déterminée alors qu'il vient d'être extrudé et que sa température est supérieure à la température d'orientation moléculaire, chaque élément constituant une ébauche (5);
- chaque ébauche (5) est placée dans une enceinte (E) pour y être refroidie par un fluide (F) à une température voisine de la température d'orientation moléculaire, le temps de séjour de l'ébauche dans l'enceinte étant supérieur au temps de production de l'ébauche par extrusion , pour permettre une mise en température correcte,
- et l'ébauche (5a) est ensuite extraite de l'enceinte (E) pour subir le traitement assurant une bi-orientation.

2. Procédé selon la revendication 1, **caractérisé par le fait que** le tube (T) , juste après extrusion et avant coupure, est refroidi superficiellement, en traversant un conformateur (7) dont la longueur est inférieure à 0,50m.

3. Procédé selon la revendication 1 ou 2, **caractérisé par le fait que** le tube est coupé par une opération de tranchage avec un dispositif (6) à lame (28), du type guillotine.

4. Procédé selon l'une des revendications précédentes, **caractérisé par le fait que** l'enceinte (E) à fluide est formée par un bac (9) à eau chaude.

5. Procédé selon la revendication 4 pour le traitement de tubes en PVC , **caractérisé par le fait que** la température de l'eau est voisine de 100°C, en particulier située dans une plage allant de 95°C à 98°C.

6. Procédé selon la revendication 4 ou 5, **caractérisé par le fait que** les ébauches (5) sont remuées dans l'enceinte (E).

7. Procédé selon l'une des revendications précédentes, **caractérisé par le fait que** le fluide est mis en circulation dans l'enceinte, en particulier suivant une direction parallèle à l'axe du tube.

8. Installation de traitement de tubes en matière plastique, notamment en PVC, pour la mise en oeuvre d'un procédé selon l'une des revendications 1 à 7, comprenant une extrudeuse (2) pour produire un tube (T) et des moyens (18) pour faire subir au tube un étirage bi-axial par dilatation radiale et par allongement axial, pour obtenir un tube à bi-orientation dont les propriétés mécaniques sont améliorées, **caractérisée par le fait qu'**elle comporte:
- des moyens de coupe (6), à la sortie de l'extrudeuse (2), pour débiter le tube en éléments (4) de longueur déterminée alors qu'il vient d'être extrudé et que sa température est supérieure à la température d'orientation moléculaire, chaque élément coupé constituant une ébauche (5);
- une enceinte (E) pour recevoir les ébauches (5) et les refroidir par un fluide (F) à une température voisine de la température d'orientation moléculaire, l'enceinte (E) étant prévue pour assurer un temps de séjour de l'ébauche supérieur au temps de production de l'ébauche par extrusion , pour permettre une mise en température correcte,
- et des moyens (15,17) d'extraction de l'ébauche hors de l'enceinte pour la faire passer aux moyens (18) pour effectuer un étirage bi-axial.

9. Installation selon la revendication 8, **caractérisée par le fait qu'**un conformateur (7) est prévu à la sortie de l'extrudeuse (2) pour refroidir superficiellement le tube (T) et permettre une coupe nette du tube encore chaud.

10. Installation selon la revendication 9, **caractérisée par le fait que** les moyens de coupe (6) sont constitués par un dispositif à lame de coupe (28) du type guillotine, en particulier fixé sur le conformateur (7).

11. Installation selon l'une des revendications 8 à 10, **caractérisée par le fait que** l'enceinte à fluide (E) est formée par un bac (9) à eau chaude qui, dans le cas du traitement du PVC, est à une température proche de, ou égale à, sa température d'ébullition sous la pression atmosphérique.

12. Installation selon la revendication 11, **caractérisée par le fait que** des moyens (10,11,12,13) pour faire circuler le fluide dans le bac, en particulier suivant la direction axiale des ébauches, sont prévus.

13. Installation selon la revendication 12, **caractérisée par le fait que** les moyens (11,12,13) pour faire circuler le fluide dans le bac sont agencés pour injecter un courant de fluide dans l'axe de l'ébauche (5a) qui est la prochaine à être extraite du bac (9).

14. Installation selon la revendication 11, **caractérisée par le fait que** le bac (9) comporte des moyens (14) de mise en rotation autour de son axe de l'ébauche (5a) qui est la prochaine à être extraite du bac .

15. Installation selon la revendication 11, **caractérisée par le fait que** les ébauches (5) sont supportées, dans le bac(9), par des bras transversaux (21) montés pivotants autour d'un axe (22), parallèle à la direction longitudinale des ébauches, et que les bras (21) peuvent être animés d'un mouvement d'oscillation alternative autour de l'axe (22).

16. Installation selon la revendication 8, **caractérisée par le fait qu'**elle comporte un tapis roulant convoyeur (8) disposé à la sortie de l'extrudeuse, dans son alignement, pour recevoir le tube(T), et que l'enceinte à fluide (E), pour mise en température de l'ébauche, est placée sur un côté du tapis convoyeur (8).

17. Installation selon la revendication 16, **caractérisée par le fait que** la vitesse du tapis convoyeur (8) est sensiblement égale a la vitesse de sortie du tube (T) de l'extrudeuse (2), et qu'elle peut être variable autour de cette condition pour sur-épaissir ou sous-épaissir localement le tube-ébauche (T).

## Patentansprüche

1. Verfahren zur Bearbeitung von durch Extrusion erhaltenen Kunststoffrohren, insbesondere aus PVC, gemäß dem ein Rohr auf eine über der Umgebungstemperatur liegende Molekularorientierungstemperatur gebracht und durch radiale Dehnung und axiale Längung einer biaxialen Streckung unterzogen wird, um ein Rohr mit Biorientierung zu erhalten, dessen mechanische Eigenschaften verbessert sind, **dadurch gekennzeichnet, daß**
- das Rohr (T) nach seiner Extrusion, und während seine Temperatur höher ist als die Molekularorientierungstemperatur, in Elemente (4) einer bestimmten Länge zerschnitten wird, wobei jedes Element einen Vorformling (5) bildet;
- jeder Vorformling (5) in einen Behälter (E) eingebracht wird, um dort durch ein Fluid (F) auf eine Temperatur nahe der Molekularorientierungstemperatur abgekühlt zu werden, wobei die Aufenthaltszeit des Vorformlings im Behälter länger ist als die Zeit der Erzeugung des Vorformlings durch Extrudieren, um eine korrekte Temperaturverteilung zu ermöglichen,
- und der Vorformling (5a) anschließend aus dem Behälter (E) herausgenommen wird, um der eine Biorientierung gewährleistenden Verarbeitung unterzogen zu werden.

2. Verfahren nach Anspruch 1, **dadurch gekennzeichnet, daß** das Rohr (T) direkt nach dem Extrudieren und vor dem Schneiden an der Oberfläche abgekühlt wird, indem es eine Abkühlvorrichtung (7) durchquert, deren Länge unter 0,50m liegt.

3. Verfahren nach Anspruch 1 oder 2, **dadurch gekennzeichnet, daß** das Rohr mittels eines Schneidevorgangs mit einer Vorrichtung (6) mit einem Schneidemesser (28) von der Art einer Guillotine zerschnitten wird.

4. Verfahren nach einem der vorhergehenden Ansprüche, **dadurch gekennzeichnet, daß** der Fluidbehälter (E) von einem Warmwasserbehälter (9) gebildet wird.

5. Verfahren nach Anspruch 4 zur Verarbeitung von PVC-Rohren, **dadurch gekennzeichnet, daß** die Temperatur des Wassers nahe 100°C liegt, insbesondere in einem Temperaturbereich zwischen 95°C und 98°C.

6. Verfahren nach Anspruch 4 oder 5, **dadurch gekennzeichnet, daß** die Vorformlinge (5) im Behälter (E) bewegt werden.

7. Verfahren nach einem der vorhergehenden Ansprüche, **dadurch gekennzeichnet, daß** das Fluid im Behälter in Umlauf versetzt wird, insbesondere in einer Richtung parallel zur Achse des Rohrs.

8. Verarbeitungsanlage für Rohre aus Kunststoffmaterial, insbesondere aus PVC, zur Anwendung eines Verfahrens nach einem der Ansprüche 1 bis 7, mit einer Strangpresse (2) zur Erzeugung eines Rohrs (T) und mit Mitteln (18), um das Rohr durch radiale Dehnung und axiale Längung einer biaxialen Streckung zu unterziehen, um ein Rohr mit Biorientierung zu erhalten, dessen mechanische Eigenschaften verbessert sind, **dadurch gekennzeichnet, daß** sie aufweist:
- Schneidemittel (6) am Ausgang der Strangpresse (2), um das Rohr in Form von Elementen (4) einer bestimmten Länge auszugeben, wenn es gerade extrudiert wurde und seine Temperatur über der Molekularorientierungstemperatur liegt, wobei jedes geschnittene Element einen Vorformling (5) bildet;
- einen Behälter (E), um die Vorformlinge (5) aufzunehmen und sie durch ein Fluid (F) auf eine Temperatur nahe der Molekularorientierungstemperatur abzukühlen, wobei der Behälter (E) vorgesehen ist, um eine Aufenthaltszeit des Vorformlings zu gewährleisten, die länger ist als die Zeit der Erzeugung des Vorformlings durch Extrudieren, um eine korrekte Temperaturverteilung zu ermöglichen,
- und Mittel (15, 17) zum Herausziehen des Vorformlings aus dem Behälter, um ihn durch die Mittel (18) zur Durchführung einer biaxialen Streckung zu führen.

9. Anlage nach Anspruch 8, **dadurch gekennzeichnet, daß** eine Auskühlvorrichtung (7) am Ausgang der Strangpresse (2) vorgesehen ist, um das Rohr (T) oberflächlich abzukühlen und einen glatten Schnitt des noch warmen Rohrs zu ermöglichen.

10. Vorrichtung nach Anspruch 9, **dadurch gekennzeichnet, daß** die Schneidemittel (6) aus einer Vorrichtung mit Schneidemesser (28) von der Art einer Guillotine bestehen, die insbesondere an der Auskühlvorrichtung (7) befestigt ist.

11. Anlage nach einem der Ansprüche 8 bis 10, **dadurch gekennzeichnet, daß** der Fluidbehälter (E) von einem Warmwasserbehälter (9) gebildet wird, wobei das Wasser im Fall der Verarbeitung von PVC eine Temperatur nahe bei oder gleich seiner Siedetemperatur unter Atmosphärendruck hat.

12. Anlage nach Anspruch 11, **dadurch gekennzeichnet, daß** Mittel (10, 11, 12, 13) vorgesehen sind, um das Fluid im Behälter in Umlauf zu versetzen, insbesondere in axialer Richtung der Vorformlinge.

13. Anlage nach Anspruch 12, **dadurch gekennzeichnet, daß** die Mittel (11, 12, 13), um das Fluid im Behälter in Umlauf zu versetzen, so ausgebildet sind, daß ein Fluidstrom in die Achse des Vorformlings (5a) gespritzt wird, der als nächster aus dem Behälter (9) entnommen wird.

14. Anlage nach Anspruch 11, **dadurch gekennzeichnet, daß** der Behälter (9) Mittel (14) aufweist, um den Vorformling (5a), der als nächster aus dem Behälter entnommen wird, um seine Achse in Drehung zu versetzen.

15. Anlage nach Anspruch 11, **dadurch gekennzeichnet, daß** die Vorformlinge (5) im Behälter (9) von Querarmen (21) gehalten werden, die um eine Achse (22) parallel zur Längsrichtung der Vorformlinge schwenkbar montiert sind, und daß die Arme (21) um die Achse (22) in eine Wechselschwingbewegung versetzt werden können.

16. Anlage nach Anspruch 8, **dadurch gekennzeichnet, daß** sie ein Transportband (8) aufweist, das am Ausgang der Strangpresse und fluchtend mit ihr angeordnet ist, um das Rohr (T) aufzunehmen, und daß der Fluidbehälter (E), um die Temperaturverteilung im Rohling zu ermöglichen, auf einer Seite des Transportbands (8) angeordnet ist.

17. Anlage nach Anspruch 16, **dadurch gekennzeichnet, daß** die Geschwindigkeit des Transportbands (8) im wesentlichen gleich der Austrittsgeschwindigkeit des Rohrs (T) aus der Strangpresse (2) ist, und daß sie um diesen Zustand herum variabel sein kann, um das Vorformling-Rohr (T) lokal zu verdicken oder zu verdünnen.

## Claims

1. Method for the processing of tubes made of plastic, especially PVC, obtained by extrusion, according to which a tube is brought to a molecular orientation temperature higher than ambient temperature and is subjected to biaxial stretching by radial expansion and by axial elongation, in order to obtain a bi-orientation tube having improved mechanical properties, **characterized in that**:
- the tube (T) is cut into elements (4) of specific length when it has just been extruded and when its temperature is higher than the molecular orientation temperature, each element constituting a blank (5);
- each blank (5) is placed in an enclosure (E) in order to be cooled there by a fluid (F) at a temperature near the molecular orientation temperature, the dwell time of the blank in the enclosure being longer than the time for producing the blank by extrusion, in order to allow correct temperature setting,
- and the blank (5a) is subsequently extracted from the enclosure (E) in order to undergo the processing which ensures bi-orientation.

2. Method according to Claim 1, **characterized in that** the tube (T), just after being extruded and before being cut, is cooled superficially by passing through a cooling fixture (7), the length of which is less than 0.50 m.

3. Method according to Claim 1 or 2, **characterized in that** the tube is cut by means of a shearing operation with a guillotine-type device (6) with a blade (28).

4. Method according to any one of the preceding claims, **characterized in that** the fluid enclosure (E) is formed by a hot-water tank (9).

5. Method according to Claim 4 for the processing of PVC tubes, **characterized in that** the temperature of the water is near 100°C, in particular located within a range of 95°C to 98°C.

6. Method according to Claim 4 or 5, **characterized in that** the blanks (5) are agitated in the enclosure (E) .

7. Method according to any one of the preceding claims, **characterized in that** the fluid is circulated in the enclosure, in particular in a direction parallel to the axis of the tube.

8. Installation for the processing of tubes made of plastic, especially PVC, for carrying out a method according to one of Claims 1 to 7, comprising an extruder (2) for producing a tube (T) and means (18) for subjecting the tube to biaxial stretching by radial expansion and by axial elongation, in order to obtain a bi-orientation tube having improved mechanical properties, **characterized in that** it comprises:
- cutting means (6) at the exit of the extruder (2), for delivering the tube in elements (4) of specific length when it has just been extruded and when its temperature is higher than the molecular orientation temperature, each cut element constituting a blank (5);
- an enclosure (E) for receiving the blanks (5) and cooling them by means of a fluid (F) at a temperature near the molecular orientation temperature, the enclosure (E) being provided for ensuring a dwell time of the blank which is longer than the time for producing the blank by extrusion, in order to allow correct temperature setting,
- and means (15, 17) for extracting the blank from the enclosure in order to cause it to pass to the means (18) for carrying out biaxial stretching.

9. Installation according to Claim 8, **characterized in that** a cooling fixture (7) is provided at the exit of the extruder (2), in order to cool the tube (T) superficially and allow a clean cut of the still hot tube.

10. Installation according to Claim 9, **characterized in that** the cutting means (6) consist of a cutting-blade device (28) of the guillotine type, in particular fastened to the cooling fixture (7).

11. Installation according to one of Claims 8 to 10, **characterized in that** the fluid enclosure (E) is formed by a hot-water tank (9) which, in the case of the processing of PVC, is at a temperature near or equal to its boiling temperature at atmospheric pressure.

12. Installation according to Claim 11, **characterized in that** means (10, 11, 12, 13) for circulating the fluid in the tank, in particular in the axial direction of the blanks, are provided.

13. Installation according to Claim 12, **characterized in that** the means (11, 12, 13) for circulating the fluid in the tank are arranged so as to inject a fluid stream along the axis of the blank (5a) which is the next to be extracted from the tank (9).

14. Installation according to Claim 11, **characterized in that** the tank (9) comprises means (14) for setting in rotation about its axis the blank (5a) which is the next to be extracted from the tank.

15. Installation according to Claim 11, **characterized in that** the blanks (5) are supported in the tank (9) by transverse arms (21) mounted pivotably about an axis (22) parallel to the longitudinal direction of the blanks, and **in that** the arms (21) can be actuated in an alternating oscillating movement about the axis (22).

16. Installation according to Claim 8, **characterized in that** it comprises a roller conveyor (8) arranged at the exit of the extruder, in alignment with the latter, for receiving the tube (T), and **in that** the fluid enclosure (E) for setting the temperature of the blank is placed on one side of the conveyor (8).

17. Installation according to Claim 16, **characterized in that** the speed of the conveyor (8) is substantially equal to the exit speed of the tube (T) from the extruder (2), and **in that** it may be variable around this condition in order to overthicken or underthicken the tube blank (T) locally.
